# EUROPÄISCHE PATENTSCHRIFT

(11) **EP 3 724 437 B1**
(45) Veröffentlichungstag und Bekanntmachung des Hinweises auf die Patenterteilung: **13.12.2023**
(21) Anmeldenummer: 18795545.5
(22) Anmeldetag: 29.10.2018
(51) Int. Cl.: E05F 11/38

(54) **FAHRZEUG-SEITENSCHEIBE MIT EINEM EINSEITIG ANGEBRACHTEN HALTEELEMENT**
VEHICLE SIDE PANEL WITH RETAINING ELEMENT MOUNTED ON ONE SIDE
VITRE LATÉRAL DU VÉHICULE DOTÉE D'UN ÉLÉMENT DE MAINTIEN FIXÉ D'UN SEUL CÔTÉ

(30) Priorität: 12.12.2017 EP 17206583
(43) Veröffentlichungstag der Anmeldung: 21.10.2020
(73) Patentinhaber: SAINT-GOBAIN GLASS FRANCE, 92400 Courbevoie (FR)
(72) Erfinder: KLEYER, Dieter, 52146 Würselen (DE); OLTROGGE, Jan-Uwe, 52066 Aachen (DE)
(74) Vertreter: Gebauer, Dieter Edmund
(86) Internationale Anmeldenummer: PCT/EP2018/079562
(87) Internationale Veröffentlichungsnummer: WO 2019/115080

(56) Entgegenhaltungen:
- DE-A1- 3 320 157
- US-A- 4 762 904

## Beschreibung

Die Erfindung betrifft ein Fahrzeug-Seitenscheibe mit einem einseitig angebrachten Halteelement, ein Verfahren zu deren Herstellung und deren Verwendung.

Kraftfahrzeuge verfügen typischerweise über zu öffnende Seitenfenster. Solche Seitenfenster sind mit einer Seitenscheibe versehen, welche sich durch im Wesentlichen vertikale Verschiebung bewegen (also heben und senken) lässt, wodurch das Seitenfenster geöffnet und geschlossen werden kann. Um das Fenster bewegen zu können, ist es mit einem Mechanismus im Inneren der Fahrzeugkarosserie verbunden.

Zur Anbindung der Seitenscheibe an den Mechanismus zum Heben und Senken kann die Seitenscheibe mit einem oder mehreren Löchern im Bereich ihrer Unterkante versehen sind. Alternativ kann auch ein oder mehrere Halteelemente im Bereich der Unterkante an der Seitenscheibe angebracht, insbesondere angeklebt sein. Solche Halteelemente weisen üblicherweise einen im Wesentlichen Y-förmigen Querschnitt auf mit zwei Anlageabschnitten, die an die beiden Oberflächen der Seitenscheibe angeklebt sind und an die sich über jeweils eine Stufe ein gemeinsamer Befestigungsabschnitt anschließt. Der Befestigungsabschnitt schließt sich an die Unterkante der Seitenscheibe an und ist mit einem Loch zur Verbindung mit dem Mechanismus zum Heben und Senken ausgestattet. Solche Y-förmigen Halteelemente sind beispielsweise aus EP1936088A1, EP1936087A1, EP1935557A1, EP1935558A1, EP1745190A1, EP1299611A2 und DE4340363A1 bekannt.

Typischerweise werden herkömmliche Y-förmige Halteelemente auf die Unterkante der Seitenscheibe aufgesteckt. Anschließend wird der Klebstoff aufgebracht, insbesondere durch Befüllöffnungen in den Anlageabschnitten eingespritzt. Um einen Austritt des Klebstoffs aus dem Zwischenraum zwischen Anlageabschnitt und Scheibenoberfläche zu verhindern, ist es dabei erforderlich, diesen Zwischenraum mit einer an die Seitenkanten der Anlageabschnitte anliegenden Dichtvorrichtung abzudichten. Der Klebstoff wird dann eingespritzt, bis der komplette Zwischenraum gefüllt ist, und ausgehärtet. Die Verwendung des Dichtelements gestaltet das Anbringen des Halteelements aufwändig.

Die Ausrichtung des aufgesteckten Halteelements hängt wesentlich von der Scheibenkrümmung im Randbereich ab, welche ihrerseits einer gewissen herstellungsbedingten Streuung unterworfen ist. Durch den sich von der Scheibenunterkante hebelartig erstreckenden Befestigungsabschnitt ist demzufolge auch die Position der Anbindung an den Mechanismus zum Heben und Senken einer Streuung unterworfen und kann teils erheblich von der vorgesehenen Position abweichen. Dies kann Produktionsausschüsse zur Folge haben.

In DE102011011600A1 wird ein einseitig anzubringendes Halteelement vorgeschlagen, welches hinsichtlich seiner Positionierung eine höhere Flexibilität erlaubt, wodurch Toleranzen ausgeglichen und Streuungen verringert werden können. Das Halteelement weist nur einen einzigen Anlageabschnitt auf, der an eine der Scheibenoberflächen wird, während der gegenüberliegenden Scheibenoberfläche kein Abschnitt des Halteelements zugeordnet ist. Die nur einseitige Verbindung des Halteelements mit der Seitenscheibe setzt jedoch die Stabilität der Anordnung herab, wodurch insbesondere die Gesamtsteifigkeit beeinträchtigt wird.

DE3320157A1 offenbart ein einseitig anzubringendes Halteelement, dessen Anlagefläche mit Vertiefungen, Einschnitten oder Durchbrechungen ausgebildet ist, um die Kontaktfläche für einen Klebstoff zu erhöhen. US4762904 offenbart ein Halteelement, dessen Anlageflächen mit jeweils einem Kanal ausgestattet sind zur seitlichen Einspritzung eines Klebstoffs.

Zur Anbringung von Halteelementen an Seitenscheiben sind Klebstoffe üblich mit Elastizitätsmodulen im Bereich von etwa 8 bis 15 MPa.

Es besteht Bedarf an Fahrzeug-Seitenscheiben mit verbesserten Halteelementen sowie an verbesserten Verfahren zur Anbringung der Halteelemente. Der vorliegenden Erfindung liegt die Aufgabe zugrunde, solche verbesserten Seitenscheiben und Verfahren bereitzustellen. Die Halteelemente sollen möglichst schnell und einfach an der Seitenscheibe anzubringen sein (insbesondere ohne Verwendung einer Dichtvorrichtung), eine hohe Positionierungsflexibilität erlauben und sicher und stabil an der Seitenscheibe haften.

Die Aufgabe der vorliegenden Erfindung wird erfindungsgemäß durch eine Seitenscheibe gemäß Anspruch 1 gelöst. Bevorzugte Ausführungen gehen aus den Unteransprüchen hervor.

Die Erfindung umfasst eine Scheibenanordnung, umfassend eine Seitenscheibe für ein Fahrzeug und ein daran einseitig angebrachtes Halteelement. Die Seitenscheibe ist als Fahrzeug-Seitenscheibe dafür vorgesehen, einen Fahrzeuginnenraum von einer äußeren Umgebung abzutrennen. Die Seitenscheibe weist eine Oberkante, eine Unterkante, eine Vorderkante und eine Hinterkante auf. Mit Oberkante wird die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist. Die Seitenscheibe weist außerdem eine erste Oberfläche (Hauptfläche) und eine der ersten Oberfläche gegenüberliegende zweite Oberfläche (Hauptfläche) auf, zwischen denen sich die besagten Kanten erstrecken.

Im Bereich der Unterkante ist mindestens ein Halteelement an der Seitenscheibe angebracht. Damit ist gemeint, dass ein an die Unterkante angrenzender Bereich vom Halteelement bedeckt ist und sich das Halteelemente von dort aus über die Unterkante hinaus erstreckt. Das erfindungsgemäße Halteelement umfasst mindestens einen Anlageabschnitt zur Befestigung an der Seitenscheibe und einen damit verbundenen, insbesondere starr verbundenen Befestigungsabschnitt zur Befestigung am Fahrzeug. Der Anlageabschnitt ist adhäsiv an der ersten Oberfläche der Seitenscheibe befestigt. Der Anlageabschnitt weist eine Anlagefläche auf, welche bestimmungsgemäß der ersten Oberfläche der Seitenscheibe zugewandt ist beziehungsweise auf diese gerichtet ist. Die Anlagefläche ist über eine Schicht eines Klebstoffs mit dieser ersten Oberfläche verbunden. Der Befestigungsabschnitt ragt bestimmungsgemäß über die Unterkante der Seitenscheibe über und ist zur Befestigung am Fahrzeug vorgesehen und geeignet. Dazu wird der Befestigungsabschnitt mit einem Mechanismus zum Heben und Senken der Seitenscheibe innerhalb der Fahrzeugkarosserie verbunden.

Das Halteelement ist erfindungsgemäß einseitig an der Seitenscheibe befestigt. Das bedeutet, dass das Halteelement nur mit der ersten Oberfläche der Seitenscheibe (und eventuell der Unterkante) verbunden ist, nicht jedoch mit der gegenüberliegenden zweiten Oberfläche. Das Halteelement weist typischerweise genau einen einzigen Anlageabschnitt auf, der mit dem Befestigungsabschnitt starr verbunden ist. Grundsätzlich kann das Halteelement aber auch mehrere Anlageabschnitte aufweisen, die jedoch alle an derselben ersten Oberfläche der Seitenscheibe befestigt sind.

Herkömmliche Halteelemente sind typischerweise über Klebstoffschichten von weniger als 1 mm Dicke mit der Seitenscheibe befestigt. Erfindungsgemäß werden demgegenüber dickere Klebstoffschichten verwendet. Die Dicke der Klebstoffschicht beträgt mindestens 1 mm, bevorzugt mindestens 2 mm. Der Klebstoff ist erfindungsgemäß ein hochmoduliger Klebstoff mit einem E-Modul (Elastizitätsmodul) von mindestens 150 MPa, bevorzugt von 150 MPa bis 600 MPa.

Durch den sich von der Scheibenunterkante hebelartig erstreckenden Befestigungsabschnitt ist bei herkömmlich angebrachten Halteelemente auch die Position der Anbindung an den Mechanismus zum Heben und Senken einer Streuung unterworfen und kann teils erheblich von der vorgesehenen Position abweichen. Die dickere Klebstoffschicht und der daraus resultierende größere Abstand zwischen Scheibenoberfläche und Anlageabschnitt gewährleisten ein hohes Maß an Flexibilität hinsichtlich der Ausrichtung des Halteelements. So kann das Halteelement derart positioniert werden, dass die relative Lage des Befestigungsabschnitts der gewünschten Ideallage entspricht unabhängig von der Randkrümmung der Scheibe im Einzelfall. Etwaige Abweichungen der Scheibenkrümmung werden gleichsam durch die dicke Klebstoffportion ausgeglichen. Produktionsstreuungen hinsichtlich der Lage des Befestigungsabschnitts können dadurch verringert werden. Da das Halteelement nur einseitig befestigt ist, wird der Platzbedarf in der Fahrzeugkarosserie durch die dickere Klebstoffschicht nicht vergrößert verglichen mit herkömmlichen beidseitig befestigten Halteelementen. Durch den vergrößerten Abstand zwischen Scheibenoberfläche und Anlageabschnitt übt der Klebstoff einen großen Einfluss auf die Gesamtsteifigkeit der Scheibenanordnung aus. Durch das hohe E-Modul wird eine ausreichende Steifigkeit und Stabilität sichergestellt. Das sind große Vorteile der vorliegenden Erfindung.

Die erfindungsgemäße Seitenscheibe ist bevorzugt eine zu öffnende, insbesondere heb- und senkbare Seitenscheibe eines Kraftfahrzeugs, insbesondere eines Personenkraftwagens. Darunter wird eine Scheibe für ein Seitenfenster verstanden, welches sich durch im Wesentlichen vertikale Verschiebung der Seitenscheibe in die Karosserie hinein öffnen und wieder schließen lässt. Typischerweise ist die Seitenscheibe mit mehreren, insbesondere zwei Halteelementen versehen, die im Bereich der Unterkante angebracht sind, wo sie im geöffneten und auch im geschlossenen Zustand des Fensters in der Fahrzeugkarosserie verborgen sind. Das Seitenfester kann rahmenlos oder rahmenhaltig sein. Ein rahmenhaltiges Seitenfester weist einen kompletten Karosserierahmen um die Fensteröffnung auf, so dass im geschlossenen Zustand alle Seitenkanten der Seitenscheibe innerhalb der von der Fahrzeugkarosserie überlappt werden - die Seitenscheibe wird beim Heben gleichsam in den Karosserierahmen eingeführt. Bei einem rahmenlosen Seitenfenster fehlt ein solcher Karosserierahmen. Stattdessen stehen die Oberkante, die Vorderkante und die Hinterkante der Seitenscheibe auf im geschlossenen Zustand frei.

Die Dicke der Klebstoffschicht zwischen Scheibenoberfläche und Anlageabschnitt beträgt bevorzugt von 1 mm bis 5 mm, besonders bevorzugt von 2 mm bis 4 mm. Damit lassen sich Streuungen hinsichtlich der Randkrümmung der Seitenscheiben wirksam kompensieren, wobei gleichzeitig eine ausreichende Steifigkeit und Stabilität gewährleistet wird.

Der Klebstoff weist bevorzugt ein E-Modul von mindestens 300 MPa auf, besonders bevorzugt von 400 MPa bis 600 MPa. Damit wird eine besondere Stabilität der Verbindung von Seitenscheibe mit Halteelement erreicht. Dieser Vorteil kommt im Besonderen bei rahmenlosen Seitenfenstern zu tragen, bei denen die Verbindung zwischen Seitenscheibe und Halteelement in besonderem Maße belastet wird, beispielsweise durch in Richtung der Hinterkante wirkende, durch den Fahrtwind hervorgerufene Kräfte. Geeignete hochmodulige Klebstoffe sind beispielsweise Polyurethan-, Acrylat- oder Epoxidklebstoffe.

Typischerweise ist der Anlageabschnitt über einen Stufenabschnitt mit dem Befestigungsabschnitt verbunden, insbesondere starr verbunden. Der Stufenabschnitt bewirkt, dass der Befestigungsabschnitt gegenüber dem Anlageabschnitt versetzt ist, insbesondere in die Richtung in welche die Anlagefläche weist. Um den Versatz zu erzeugen, betragen der Winkel zwischen dem Stufenabschnitt und dem Anlageabschnitt sowie der Winkel zwischen dem Stufenabschnitt und dem Befestigungsabschnitt größer 0° und kleiner 180°, typischerweise größer oder gleich 45° und kleiner 180°. Der laterale Versatz zwischen Anlageabschnitt und Befestigungsabschnitt ermöglicht, dass der über die Unterkante der Seitenscheibe hinausragende Befestigungsabschnitt in Einbaulage in der Ebene der Seitenscheibe angeordnet ist. Anders ausgedrückt ist der Befestigungsabschnitt auf die Unterkante der Seitenscheibe gerichtet. Das ist hinsichtlich der Lage des Gewichtsschwerpunkts und des Platzbedarfs in der Fahrzeugkarosserie vorteilhaft.

In der erfindungsgemäßen Seitenscheibe weist das Halteelement mindestens eine, bevorzugt genau eine Befüllöffnung auf. Damit ist eine Durchführung durch das Halteelement gemeint, die dazu vorgesehen und geeignet ist, Klebstoff von der von der Seitenscheibe abgewandten Seite des Halteelements durch das Halteelement hindurch in den Zwischenraum zwischen Anlageabschnitt und Scheibenoberfläche einzuspritzen. Solche Befüllöffnungen sind auch bei herkömmlichen Halteelementen üblich. Der Flächeninhalt der Befüllöffnung beträgt typischerweise von 0,5 mm² bis 25 mm², bevorzugt von 2 mm² bis 12 mm². Die Befüllöffnung kann im Anlageabschnitt oder im Stufenabschnitt ausgebildet sein, oder auch die Grenze zwischen beiden Bereichen überspannen.

In der erfindungsgemäßen Seitenscheibe weist die Anlagefläche des Anlageabschnitts mindestens einen Kanal auf. Unter einem Kanal wird im Sinne der Erfindung eine langgestreckte Vertiefung bezeichnet, die in der Anlagefläche eingebracht ist, welche ansonsten eine plane oder gekrümmte Fläche aufspannt, insbesondere plan ist. Der Kanal ist erfindungsgemäß dafür vorgesehen, das

Fließverhalten, insbesondere die Fließrichtung, eines in den Zwischenraum zwischen Anlageabschnitt und Seitenscheibe eingespritzten Klebstoffs zu beeinflussen und kann daher auch als Fließkanal bezeichnet werden. Der Kanal soll insbesondere die Verteilung des Klebstoffs über die Anlagefläche verbessern. Um eine hinreichende Benetzung der Anlagefläche und des ihr gegenüberliegenden Teils der Scheibenoberfläche zu gewährleisten, muss bei herkömmlichen Halteelementen entweder der Zwischenraum zwischen Anlagefläche und Scheibenoberfläche abgedichtet werden oder ein erheblicher Austritt an Klebstoff aus dem Zwischenraum in Kauf genommen werden, der nachträglich entfernt werden muss. Der mindestens eine Fließkanal bewirkt eine verbesserte Verteilung des Klebstoffs über die Anlagefläche, so dass deren hinreichende Benetzung erreicht wird ohne Austritt von Klebstoff oder zumindest mit stark reduziertem Austritt von Klebstoff. So kann auf das Abdichten des Zwischenraums zwischen Anlageabschnitt und Seitenscheibe oder auf eine Nachbearbeitung zur Entfernung überschüssigen Klebstoffs verzichtet werden, was das Herstellungsverfahren entscheidend vereinfacht und beschleunigt. Der mindestens eine Kanal ist auf die Befüllöffnung gerichtet, so dass der Klebstoff ausgehend von der Befüllöffnung über die Anlagefläche verteilt wird. Anders ausgedrückt weist der Kanal auf die Befüllöffnung. Der Kanal kann sich bis zur Befüllöffnung erstrecken; alternativ kann das der Befüllöffnung zugewandte Kanalende einen Abstand zur Befüllöffnung aufweisen.

Der mindestens eine Kanal ist derart in der Anlagefläche angeordnet, dass sich ein durch die Befüllöffnung in den Zwischenraum eingespritzter Klebstoff gleichmäßiger über die Anlagefläche verteilt verglichen mit einem Halteelement mit herkömmlicher Anlagefläche ohne Kanal. Insbesondere sollten mindestens 95% der Anlagefläche und des ihr gegenüberliegenden Bereichs der Scheibenoberfläche mit Klebstoff benetzt werden, bevor der Klebstoff beginnt, aus dem Zwischenraum auszutreten beziehungsweise über die Anlagefläche überzutreten. Die geometrische Anordnung des Kanals ist dazu auf vielfältige Weise realisierbar und kann vom Fachmann in Abhängigkeit von den Erfordernissen im Einzelfall geeignet gewählt werden.

Prinzipiell kann ein einziger Kanal ausreichend sein, der beispielsweise schneckenhausartig um die Befüllöffnung verläuft. Erfindungsgemäß weist die Anlagefläche aber eine Mehrzahl von Kanälen auf. Die Kanäle sind dabei auf die Befüllöffnung gerichtet und fächerartig über die Anlagefläche oder einen Bereich der Anlagefläche verteilt. Das bedeutet, dass sich die einzelnen Kanäle radial zwischen der Befüllöffnung und den Seitenkanten der Anlagefläche erstrecken. Die Kanäle können bis zu den Seitenkanälen verlaufen oder vorher enden. Bevorzugt verlaufen die Kanäle nicht bis zu den Seitenkanten, sondern enden vorher, so dass ein Austritt von Klebstoff über die
Anlagefläche hinaus weniger
befördert wird. Der Abstand der Kanalenden zur Seitenkante der Anlagefläche beträgt bevorzugt von 2 mm bis 15 mm, besonders bevorzugt von 3 mm bis 8 mm. Die Kanäle können sich bis zur Befüllöffnung erstrecken oder einen Abstand zur Befüllöffnung aufweisen, wobei ersteres bevorzugt ist.

Die Anlagefläche weist typischerweise eine polygonale, insbesondere rechteckige Form auf. In einer vorteilhaften Ausgestaltung ist mindestens einer Ecke der Anlagefläche ein Kanal zugeordnet, der auf sie gerichtet ist. Bevorzugt ist der oder den Ecken der Anlagefläche, die am weitesten von der Befüllöffnung entfernt sind, jeweils ein Kanal zugeordnet, der auf sie gerichtet ist. Da die Befüllöffnung typischerweise in der Nähe der zum Befestigungsabschnitt hingewandten Kante der Befüllöffnung angeordnet ist, sind die besagten Ecken typischerweise die vom Befestigungsabschnitt abgewandten Ecken der Anlagefläche. Der Klebstoff wird dann vorteilhaft in den Bereich dieser weit von der Befüllöffnung entfernten Ecken befördert, was die Homogenität der Klebstoffverteilung entscheidend verbessert.

Die Breite und Tiefe des mindestens einen Kanals kann vom Fachmann nach den Erfordernissen im Einzelfall geeignet gewählt werden. Die geeignete Breite und Tiefe hängt insbesondere von der Viskosität des Klebstoffs ab, wobei eine höhere Viskosität breitere und tiefere Kanäle erforderlich macht. Die Breite des Kanals oder der Kanäle beträgt typischerweise von 0,5 mm bis 3 mm, bevorzugt von 1 mm bis 2 mm. Die Tiefe des Kanals oder der Kanäle beträgt typischerweise von 0,5 mm bis 2 mm, bevorzugt von 1 mm bis 1,5 mm. Mit diesen Werten werden gute Ergebnisse erreicht, insbesondere bei Verwendung eines gebräuchlichen Klebstoffs mit einer Viskosität von 1 Pa×s bis 150 Pa×s. Die Breite und/oder die Tiefe eines einzelnen Kanals können auch veränderlich sein. So kann es beispielsweise vorteilhaft sein, dass sich die Breite und/oder die Tiefe des Kanals mit wachsendem Abstand zur Befüllöffnung verringern, um der geringeren zu transportierenden Menge an Klebstoff in den äußeren Bereichen der Anlagefläche Rechnung zu tragen.

In einer zweiten Ausgestaltung der erfindungsgemäßen Seitenscheibe weist das Halteelement keine Befüllöffnung auf. Der Anlageabschnitt und gegebenenfalls der Stufenabschnitt weisen bevorzugt keine Durchführungen auf. Da das erfindungsgemäße Halteelement nur einseitig an die Seitenscheibe angelegt wird, kann der Klebstoff vorher auf die Anlagefläche aufgetragen werden und das Halteelement abschließend exakt an der Scheibe positioniert werden.

Der Befestigungsabschnitt des erfindungsgemäßen Halteelements weist typischerweise eine Durchführung (Montageloch) auf, die zur Befestigung am Fahrzeug vorgesehen und geeignet ist. Die Durchführung dient im Speziellen zur Verbindung mit einem in der Fahrzeugkarosserie, typischerweise einer Fahrzeugtür, angeordneten Hebemechanismus (Mechanismus zum Heben und Senken der Seitenscheibe), um die Scheibe zu befestigen, insbesondere durch Einführen eines Befestigungsabschnitts des Hebemechanismus, beispielsweise eines Befestigungsstifts, in die Durchführung. Die Durchführung ist üblicherweise im Wesentlichen kreisrund, worauf die meisten herkömmlichen Befestigungssysteme ausgelegt sind. Die Durchführung kann aber je nach den Erfordernissen im Einzelfall auch jede beliebige andere Form aufweisen, beispielsweise eine elliptische Form oder auch eine unregelmäßige Form. Die Größe der Durchführung beträgt üblicherweise mindestens 20 mm², insbesondere von 20 mm² bis 2000 mm², bevorzugt von 80 mm² bis 700 mm². Die Durchführung ist idealerweise etwa kreisrund mit einem Durchmesser von 5 mm bis 50 mm, bevorzugt von 10 mm bis 30 mm.

Das Halteelement ist bevorzugt aus einem Metall, einer Metalllegierung oder einem Kunststoff gefertigt, besonders bevorzugt aus Aluminium, Stahl, Edelstahl oder thermoplastischen Kunststoffen mit oder ohne Glasfaser-, Glaskugel- oder ähnlichen Verstärkungen sowie ihre Blends mit weiteren Kunststoffen. Geeignete thermoplastische Kunststoffe sind beispielsweise Polyamide (PA), Polybutylenterephthalaten (PBT) oder Polyethylenterephthalat (PET). Das Halteelement ist ganz besonders bevorzugt aus Aluminium, PET oder Polyamid 66 gefertigt. Geeignete Materialien sind beispielsweise unter den Halndelsnamen Technyl, Zytel, Ultramid, Schulamid, Ultradur, Arnite, Duranex, Crastin, Bergadur, Pocan oder Grivor erhältlich. Auch Kombinationen der genannten Materialien sind denkbar. Bevorzugt ist das gesamte Halteelement aber einstückig ausgebildet und aus demselben Material gefertigt. Ist das Halteelement aus einem Kunststoff gefertigt, so ist dieser Kunststoff bevorzugt glasfaserverstärkt oder kohlenstofffaserverstärkt. Für rahmenlose Seitenfenster sind Halteelemente aus Metallen oder Metalllegierungen bevorzugt aufgrund ihrer größeren Stabilität. Für rahmenhaltige Seitenfenster sind Halteelemente aus Kunststoff bevorzugt aufgrund ihres geringeren Gewichts - die geringere Stabilität des Kunststoff-Halteelements im Vergleich zu metallenen Halteelementen wird hier durch die stabilisierende Wirkung des Rahmens im geschlossenen Zustand des Fensters ausgeglichen.

Der Anlageabschnitt und der Befestigungsabschnitt sind plattenartig ausgebildet, typischerweise im Wesentlichen rechteckig, wobei allerdings auch andere Formen denkbar sind. Die Materialstärke (Dicke) des Befestigungsabschnitts und des Anlageabschnitts und gegebenenfalls des Stufenabschnitts beträgt bevorzugt von 1 mm bis 10 mm, besonders bevorzugt von 2 mm bis 5 mm, beispielsweise 3,5 mm. Damit wird eine gute Stabilität erreicht, ohne dass damit ein zu großer Platzbedarf und ein zu hoher Materialeinsatz einhergeht. Bevorzugt weisen der Anlageabschnitt, der Befestigungsabschnitt und gegebenenfalls der Stufenabschnitt dieselbe Materialstärke auf.

Die Breite des Anlageabschnitts, des Befestigungsabschnitts und gegebenenfalls des Stufenabschnitts beträgt bevorzugt von 1 cm bis 100 cm, besonders bevorzugt von 2 cm bis 15 cm, beispielsweise 10 cm. Damit wird eine gute Stabilität erreicht, insbesondere stellen die Anlageabschnitte ausreichend große Adhäsionsflächen zur Verbindung mit der Seitenscheibe bereit.

Die Länge (oder Höhe) des Anlagelageabschnitts beträgt bevorzugt von 1 cm bis 6 cm, besonders bevorzugt von 2 cm bis 4 cm, beispielsweise 3 cm. Damit wird eine gute Stabilität erreicht, insbesondere stellen die Anlageabschnitte ausreichend große Adhäsionsflächen zur Verbindung mit der Seitenscheibe bereit. Die Fläche des Anlageabschnitts beträgt bevorzugt von 5 cm² bis 500 cm², besonders bevorzugt von 10 cm² bis 50 cm², beispielsweise 30 cm².

Die Länge (oder Höhe) des Befestigungsabschnitts beträgt bevorzugt von 2 cm bis 15 cm, besonders bevorzugt von 4 cm bis 10 cm, beispielsweise 8 cm. In diesem Bereich ist der Befestigungsabschnitt besonders vorteilhaft geeignet zur Verbindung mit üblichen Mechanismen zum Heben und Senken der Seitenscheibe. Die Länge des Stufenabschnitts beträgt beispielsweise von 2 mm bis 10 mm.

Im Sinne der Erfindung wird mit Breite die Dimension entlang der Unterkante der Seitenscheibe in Einbaulage bezeichnet. Mit Länge (oder Höhe) wird die dazu senkrechte Dimension verstanden, die in Einbaulage im Wesentlichen parallel zur Ebene der Seitenscheibe angeordnet ist. So ergibt sich die Kontaktfläche eines Anlageabschnitts zur Seitenscheibe beispielsweise als Produkt aus Länge und Breite des Anlageabschnitts. Die Materialstärke ist die Dimension senkrecht zur Ebene der Seitenscheibe in Einbaulage.

Der Befestigungsabschnitt und der Anlageabschnitte können plan ausgebildet sein. Die Krümmung der Seitenscheibe wird dann durch die Schicht an Klebstoff kompensiert. Alternativ können der Anlageabschnitt und oder der Befestigungsabschnitt aber auch gekrümmt sein und so beispielsweise an die Krümmung der Seitenscheibe angepasst sein und diese nachbilden und im Falle des Befestigungsabschnitts fortsetzen.

In einer vorteilhaften Ausgestaltung ist der Klebstoff ein schnellhärtender Klebstoff, so dass ein direktes Entformen ohne weitere Stabilisierungsmaßnahmen ermöglicht wird. Die schnelle Aushärtung kann durch Vermischen zweier Komponenten erreicht werden (2-KomponentenKlebstoff). Andere Wege sind eine Aushärtung durch Energieeintrag von außen, beispielsweise mittels Wärme oder Licht. Die sogenannte offene Zeit des zweikomponentigen Klebstoffes liegt zwischen 0,5 min und 10 min, bevorzugt zwischen 1 min und 5 min. Die Aushärtezeit oder Abbindezeit des Klebstoffes zur Erreichung einer ausreichenden inneren Festigkeit ist kleiner 10 min, bevorzugt von 1 min bis 5 min. Das hat den Vorteil, dass die Position des Halteelements zur Seitenscheibe schnell fixiert ist, so dass auf stabilisierende Maßnahmen nach dem Anbringen des Halteelements verzichtet werden kann. Der Klebstoff kann aber auch ein langsamhärtender Klebstoff sein.

Die Seitenscheibe ist, wie für Fahrzeugscheibe üblich, bevorzugt so gebogen, dass die innenraumseitige Oberfläche konkav und die außenseitige Oberfläche konvex ausgebildet ist. Als außenseitige Oberfläche wird diejenige Oberfläche bezeichnet, welche in Einbaulage der äußeren Umgebung zugewandt ist. Als innenraumseitige Oberfläche wird diejenige Oberfläche bezeichnet, welche in Einbaulage dem Innenraum zugewandt ist. Die erste Oberfläche im Sinne der Erfindung kann die innenraumseitige oder die außenseitige Oberfläche sein, bevorzugt die innenraumseitige.

In einer Ausgestaltung ist die Seitenscheibe als Einscheibensicherheitsglas (ESG) ausgebildet. Die Seitenscheibe besteht dabei aus einer einzelnen Glasscheibe, die thermisch oder chemisch gehärtet (vorgespannt) ist. Die Dicke der Glasscheibe beträgt bevorzugt von 2 mm bis 5 mm.

In einer anderen Ausgestaltung ist die Seitenscheibe als Verbundscheibe (VSG: Verbundsicherheitsglas) ausgebildet. Die Verbundscheibe umfasst eine erste Glasscheibe und eine zweite Glasscheibe, die durch eine thermoplastische Zwischenschicht miteinander verbunden sind. Die Scheiben können auch als Außenscheibe und Innenscheibe bezeichnet werden, wobei die Innenscheibe in Einbaulage dem Innenraum zugewandt ist und die Außenscheibe in Einbaulage der äußeren Umgebung zugewandt ist. Die exponierten Oberflächen der Seitenscheibe, an denen das Halteelement angeklebt wird, sind die von der Zwischenschicht abgewandten Oberflächen der Einzelscheiben, also die außenseitige Oberfläche der Außenscheibe und die innenraumseitige Oberfläche der Innenscheibe. Die Außenscheibe und die Innenscheibe weisen bevorzugt eine Dicke von Dicke von 1 mm bis 5 mm, wobei die Dicke der beiden Scheiben gleich sein kann (symmetrische Scheiben) oder auch unterschiedlich (asymmetrische Scheiben). Die Dicke der Zwischenschicht beträgt bevorzugt von 0,3 mm bis 2 mm, besonders bevorzugt von 0,5 mm bis 1 mm. Die Zwischenschicht wird typischerweise aus einer Polymerfolie ausgebildet, bevorzugt aus oder auf Basis von Polyvinylbutyral (PVB), Ethylenvinylacetat (EVA) oder Polyurethan (PU). Zur Verbesserung des thermischen Komforts im Fahrzeug kann die Zwischenschicht aus einer geräuschmindernden Polymerfolie ausgebildet sein, welche typischerweise mindestens drei Lagen umfassen, wobei die mittlere Lage eine höhere Plastizität oder Elastizität aufweist als die sie umgebenden äußeren Lagen, beispielsweise infolge eines unterschiedlichen Anteils an Weichmachern.

Die Glasscheibe oder Glasscheiben ist/sind bevorzugt aus Kalk-Natronglas gefertigt, wie es für Fensterscheiben üblich ist. Die Glasscheiben können klar und farblos, aber auch getönt, getrübt oder gefärbt sein.

Die Erfindung umfasst auch ein Fahrzeug mit einem innerhalb der Karossiere angeordneten Hebemechanismus für ein zu öffnendes Seitenfenster und einer erfindungsgemäßen Seitenscheibe, wobei der Hebemechanismus am Befestigungsabschnitt des Halteelements oder der Halteelemente angebracht ist, bevorzugt über eine Halterung in der Durchführung durch den Befestigungsabschnitt.

Die Erfindung umfasst außerdem ein Verfahren zur Herstellung einer Seitenscheibe mit Halteelement für ein Fahrzeug. Dabei werden eine Seitenscheibe und ein erfindungsgemäßes Halteelement bereitgestellt. Das Halteelement weist einen Anlageabschnitt mit einer Anlagefläche und einen mit dem Anlageabschnitt verbundenen Befestigungsabschnitt auf. Die Seitenscheibe weist eine erste Oberfläche, eine dieser gegenüberliegende zweite Oberfläche auf sowie eine Unterkante, eine Oberkante, eine Vorderkante und eine Hinterkante auf. Das Halteelement wird im Bereich der Unterkante einseitig an der Seitenscheibe befestigt, indem die Anlagefläche über einen Klebstoff mit der ersten Oberfläche verbunden wird. Der Klebstoff weist eine Dicke von mindestens 1 mm auf und ein E-Modul von mindestens 150 MPa.

In einer ersten bevorzugten Ausführungsform des Verfahrens wird der Klebstoff nur auf einen zentralen Bereich der Anlagefläche aufgebracht. Der Klebstoff weist einen Abstand zu den Seitenkanten der Anlagefläche von mindestens 2 mm auf, bevorzugt von 2 mm bis 10 mm. Es bleibt also ein umlaufender Randbereich der Anlagefläche frei von Klebstoff. Anschließend wird das Halteelement an die erste Oberfläche angelegt, insbesondere angedrückt. Dabei verteilt sich der Klebstoff infolge des Anpressdrucks über die Anlagefläche. Bei geeigneter Bemessung der Klebstoffmenge tritt der Klebstoff aber nicht aus dem Zwischenraum zwischen dem jeweiligen Anlageabschnitt und der zugeordneten Scheibenoberfläche aus. Die geeignete Menge an Klebstoff hängt vom bestimmungsgemäßen Abstand zwischen Scheibenoberfläche und Anlageabschnitt und von der Größe der Anlagefläche ab und können vom Fachmann durch einfache Berechnungen oder Vorversuche ermittelt werden. Es ist ein besonderer Vorteil des erfindungsgemäßen einseitigen Halteelements, dass die Anlagefläche zugänglich ist und der Klebstoff gezielt darauf verteilt werden kann.

In dieser ersten Ausführungsform ist keine Befüllöffnung zum Einspritzen von Klebstoff nötig und daher bevorzugt nicht vorhanden.

In einer vorteilhaften Variante der ersten Ausführungsform ist der Klebstoff ein schnellhärtender Klebstoff. Dadurch wird die Position des Halteelements relativ zur Seitenscheibe ausreichend schnell fixiert, so dass auf Maßnahmen der vorübergehenden Positionsstabilisierung während des Aushärtens des Klebstoffs verzichtet werden kann. Der Produktionsprozess wird somit vereinfacht und beschleunigt.

In einer alternativen vorteilhaften Variante der ersten Ausführungsform ist der Klebstoff ein langsamhärtender Klebstoff. Um eine Verschiebung des Halterelements vor dem vollständigen Aushärten des Klebstoffs zu verhindern, sollten Maßnahmen zur vorübergehenden Positionsstabilisierung ergriffen werden. Dies kann vorteilhafterweise durch einen zweiten Klebstoff, beispielsweise einem Heißklebstoff, der im vom eigentlichen Klebstoff freien Randbereich der Klebefläche aufgebracht wird, beispielsweise punktuell in den Ecken der Klebefläche. Der schnellhärtende zweite Klebstoff sichert die Position des Halteelements, während der eigentliche Klebstoff aushärtet. Da die Verbindung zwischen Seitenscheibe und Halteelement während des Aushärtens in der Regel keinen größeren Kräften ausgesetzt sind als die auf das Halteelement wirkende Schwerkraft, sind die Anforderungen an die Adhäsionskraft des zweiten Klebstoffs vergleichsweise gering.

In einer zweiten ersten bevorzugten Ausführungsform des Verfahrens weist das Halteelement eine Befüllöffnung auf zum Einspritzen des Klebstoffs in den Zwischenraum zwischen dem Anlageabschnitt und der ersten Oberfläche der Seitenscheibe. Die Anlagefläche weist mindestens einen Kanal auf, der auf die Befüllöffnung gerichtet ist und geeignet ist, die Fließrichtung des Klebstoffs zu beeinflussen. Befüllöffnung und Kanal sind bereits im Zusammenhang mit der erfindungsgemäßen Seitenscheibe genauer beschrieben worden, worauf hier verwiesen wird. Das Halteelement wird in der gewünschten Position zur Seitenscheibe angeordnet, wobei die Anlagefläche des Anlageabschnitts auf die erste Oberfläche der Seitenscheibe gerichtet ist. Die gewünschte Position bezeichnet hierbei die bestimmungsgemäße Anordnung des Halteelements relativ zur Seitenscheibe, die das fertig montierte Halteelement einnehmen soll. Dann wird der Klebstoff durch die Befüllöffnung in den Zwischenraum zwischen der Anlagefläche und der ersten Oberfläche der Seitenscheibe eingespritzt. Der mindestens eine Kanal der Anlagefläche bewirkt eine homogene Verteilung des Klebstoffs. Die Klebeflächen können so hinreichend benetzt werden, ohne dass eine kritische Menge an Klebstoff aus dem Zwischenraum zwischen der Anlagefläche und der Scheibenoberfläche austritt. Das Verfahren kann daher vorteilhafterweise ohne eine Abdichtung des Zwischenraums durchgeführt werden.

In beiden bevorzugten Ausführungsformen kann vermieden werden, dass Klebstoff aus dem Zwischenraum zwischen Scheibenoberfläche und Anlagefläche austritt, entweder durch die geeignete Menge an vorher im zentralen Bereich der Anlagefläche aufgebrachtem Klebstoff oder durch die leitende Wirkung der Kanäle auf den eingespritzten Klebstoff. Es ist daher nicht erforderlich, den besagten Zwischenraum abzudichten, um den Austritt von Klebstoff zu verhindern. Bevorzugt werden daher auch keine Maßnahmen zur Abdichtung des Zwischenraums ergriffen, wie beispielsweise das vorübergehende Anbringen eines Dichtelements um den Anlageabschnitt. Dies vereinfacht des Verfahren in vorteilhafter Weise.

Bevorzugt wird die Seitenscheibe in einem Werkzeug in einer festgelegten Position, die beispielsweise anhand von Referenzpunkten der Scheibe definiert ist, angeordnet und fixiert. Das Halteelement wird in die gewünschte Position gebracht, beispielsweise mit einer Montagehilfe oder einem Roboter. Die Position des Halteelements wird so gewählt, dass die Befestigungsabschnitte des fertig montierten Halteelements in der gewünschten Position relativ zur Scheibe angeordnet sind.

Das Halteelement selbst wird durch fachübliche Verfahren hergestellt. Halteelemente aus Kunststoff werden bevorzugt im Spritzgussverfahren gefertigt, Halteelemente aus Metall oder Metalllegierungen beispielsweise durch Stanzen, Walzen und/oder Schweißen. Die Kanäle können beispielsweise durch die Spritzgussform direkt ausgebildet werden oder durch nachträgliche Bearbeitung eingebracht werden.

Die Erfindung umfasst außerdem die Verwendung einer erfindungsgemäßen Seitenscheibe als zu öffnende Seitenscheibe eines Kraftfahrzeugs, bevorzugt eines Personenkraftwagens, wobei das Halteelement zur Befestigung an einem Hebemechanismus in der Fahrzeugkarosserie dient.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Seitenscheibe mit zwei gattungsgemäßen Halteelementen,
- Fig. 2: einen Querschnitt durch eine erfindungsgemäße Seitenscheibe,
- Fig. 3: eine Draufsicht auf die zur Seitenscheibe 1 hingewandte Oberfläche einer Ausgestaltung des Halteelements 1,
- Fig. 4: einen Schnitt A-A' durch das Halteelement 1 aus Figur 3,
- Fig. 5: einen Querschnitt durch eine weitere Ausgestaltung der Seitenscheibe,
- Fig. 6: eine Draufsicht auf die zur Seitenscheibe 1 hingewandte Oberfläche einer weiteren Ausgestaltung des Halteelements 1,
- Fig. 7: ein Flussdiagramm einer Ausführungsform des erfindungsgemäßen Verfahrens und
- Fig. 8: ein Flussdiagramm einer weiteren Ausführungsform des erfindungsgemäßen Verfahrens.

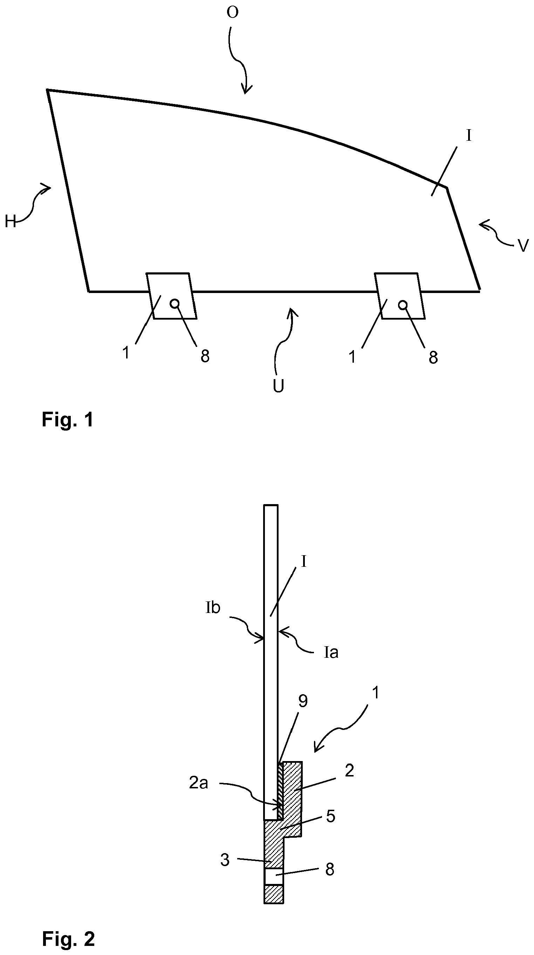

Fig. 1 zeigt eine Draufsicht auf eine gattungsgemäße Seitenscheibe 1, die als zu öffnende Seitenscheibe für das vordere Seitenfenster eines Personenkraftwagens vorgesehen ist. Im Bereich der Unterkante U der Seitenscheibe sind zwei Halteelemente 1 angebracht, die zur Verbindung mit einem Hebemechanismus innerhalb der Fahrzeugtür vorgesehen sind. Die Halteelemente 1 weisen hierzu Durchführungen 8 auf, an denen der Hebemechanismus befestigt werden kann.

Fig. 2 zeigt einen Querschnitt durch eine Ausgestaltung der erfindungsgemäßen Seitenscheibe 1 mit dem Halteelement 1. Das Halteelement 1 ist einseitig an der Seitenscheibe 1 angebracht. Das Halteelement 1 ist aufgebaut aus einem einzigen Anlageabschnitt 2, der an der ersten Oberfläche Ia der Seitenscheibe 1 befestigt ist. Dazu ist die der Seitenscheibe 1 zugewandte Anlagefläche 2a des Anlageabschnitts 2 an die Oberfläche Ia angeklebt über eine Schicht eines Klebstoffs 9. Über einen Stufenabschnitt 5 ist an den Anlageabschnitt 2 ein Befestigungsabschnitt 3 mit der Durchführung 8 angeschlossen. Das Halteelement 1 bedeckt einen Bereich der Unterkante U und einen daran angrenzenden Bereich der Oberfläche Ia. Der Befestigungsabschnitt 3 ragt über die Unterkante U der Seitenscheibe 1 über, ist lateral gegenüber dem Anlageabschnitt 2 versetzt, so dass er etwa in der Ebene der Seitenscheibe 1 angeordnet ist und auf deren Unterkante U gerichtet ist

Das Halteelement 1 ist einstückig aus glasfaserverstärktem Polyamid 66 gefertigt. Der Anlageabschnitt 1, der Befestigungsabschnitt 2 und der Stufenabschnitt 5 weisen eine Dicke D (Materialstärke) von 3 mm auf. Die Breite B des Halteelements 1 beträgt beispielsweise 80 mm. Die Länge L des Anlageabschnitts 2 beträgt beispielsweise 30 mm. Die Länge L des Befestigungsabschnitts 3 beträgt beispielsweise 50 mm.

Der Klebstoff 9 ist beispielsweise DOW Betaforce 9050S mit einem E-Modul von 400 MPa, einer Bruchdehnung von 80 %, einer Reißfestigkeit von 15 MPa und einer Topfzeit von 6 min. Die Dicke der Klebstoffschichten beträgt beispielsweise 3 mm.

Die Seitenscheibe 1 ist beispielsweise als Einscheibensicherheitsglas (ESG) ausgeführt aus 3,85 mm dickem Kalk-Natronglas. Die Seitenscheibe 1 ist der Einfachheit halber in der Figur plan dargestellt, weist in der Realität aber eine Krümmung auf, wie es für Scheiben von Personenkraftwagen üblich ist.

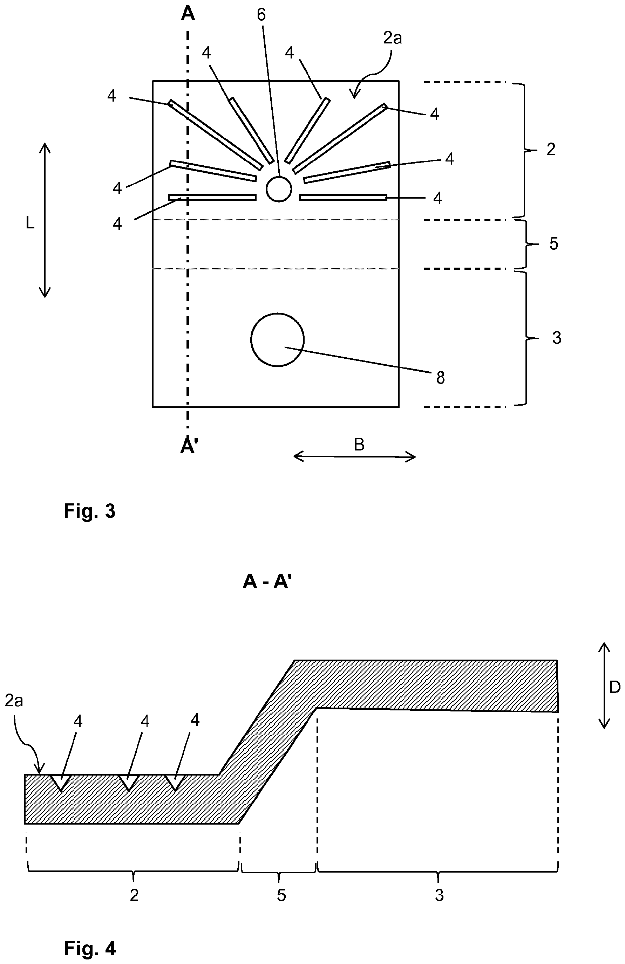

Fig. 3 zeigt eine Draufsicht auf die der Seitenscheibe 1 zugewandte Seite einer Ausgestaltung des erfindungsgemäßen Halteelements 1 mit dem Befestigungsabschnitt 3 samt Durchführung 8, dem Stufenabschnitt 5 und dem Anlageabschnitt 2. In der Draufsicht ist die Anlagefläche 2a des Anlageabschnitts 2 zu erkennen, welche mit der Seitenscheibe 1 verbunden wird. Die Anlagefläche weist nahe der dem Stufenabschnitt 5 zugewandten Kante eine Befüllöffnung 6 auf, durch die bei der Montage des Halteelements 1 ein Klebstoff in den Zwischenraum zwischen Seitenscheibe 1 und Anlageabschnitt 2 eingespritzt wird. In die Anlagefläche 2a ist eine Mehrzahl von Kanälen 4 eingebracht. Die Kanäle 4 sind dafür vorgesehen, den durch die Befüllöffnung 6 eingespritzten Klebstoff möglichst homogen über die Anlagefläche 2a zu verteilen. Dadurch kann eine gute Benetzung der Anlagefläche 2a sowie dem ihr gegenüberliegenden Bereich der Oberfläche Ia erreicht werden, ohne dass überschüssiger Klebstoff aus dem Zwischenraum auszutreten droht, was bei herkömmlichen Halteelementen 1 durch eine Dichtvorrichtung verhindert oder durch Nachbearbeitung behoben werden müsste. Die Kanäle 4 sind gerade ausgebildet und einerseits auf die Befüllöffnung 6 und andererseits auf die Seitenkante der Anlagefläche 2a gerichtet. Die Kanäle 4 sind fächerartig um die Befüllöffnung verteilt und verlaufen radial zwischen Befüllöffnung 6 und Seitenkante der Anlagefläche 2a, um den Klebstoff zu verteilen.

Die Befüllöffnung 6 könnte alternativ auch in Stufenabschnitt 5 angeordnet sein oder auf der Grenze zwischen Anlageabschnitt 2 und Stufenabschnitt 5.

In der Figur sind durch Pfeile die Dimensionen der Breite B und der Länge L im Sinne der Erfindung angedeutet.

Fig. 4 zeigt einen Schnitt entlang A-A' durch das Halteelement 1 aus Figur 3. Außerdem ist durch einen Pfeil die Dimension der Dicke D (Materialstärke) im Sinne der Erfindung angedeutet. Zu erkennen sind die Kanäle 4, die in die Anlagefläche 2a eingebracht sind. Sie weisen beispielsweise eine Breite von 1,5 mm auf und eine Tiefe von 1 mm.

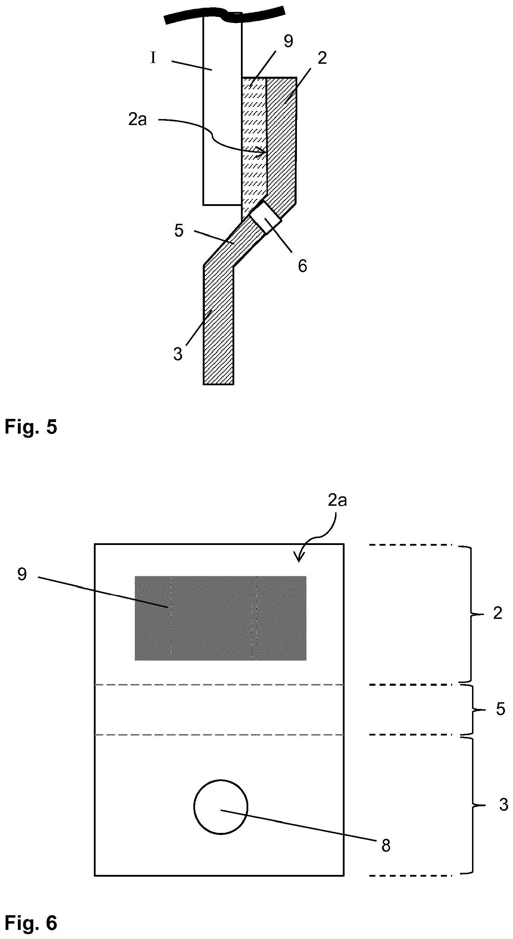

Fig. 5 zeigt einen Querschnitt durch eine erfindungsgemäße Seitenscheibe 1 mit einer weiteren Ausgestaltung des Halteelements 1. Die Befüllöffnung 6 zum Einspritzen des Klebstoffs 9 ist hier im Stufenabschnitt 5 angeordnet. In diesem Fall kann es für die Verteilung des Klebstoffs 9 vorteilhaft sein, wenn sich die Kanäle 4 über den Anlageabschnitt 2 hinaus in den Stufenabschnitt 5 fortsetzen.

Fig. 6 zeigt eine Draufsicht auf die der Seitenscheibe 1 zugewandte Seite einer weiteren Ausgestaltung des erfindungsgemäßen Halteelements 1 mit dem Befestigungsabschnitt 3 samt Durchführung 8, dem Stufenabschnitt 5 und dem Anlageabschnitt 2. In der Draufsicht ist die Anlagefläche 2a des Anlageabschnitts 2 zu erkennen, welche mit der Seitenscheibe 1 verbunden wird. Auf die Anlagefläche 2a ist eine Schicht des Klebstoffs 9 aufgebracht. Der Klebstoff 9 ist nur in einem zentralen Bereich der Anlagefläche 2a aufgebracht, so dass ein umlaufender Randbereich mit einer Breite von 5 mm der Anlagefläche 2a frei bleibt. Beim Ankleben des Halteelements 1 kann sich der Klebstoff 9 über diese freie Fläche verteilen, so dass er nicht aus den Zwischenräumen zwischen der Seitenscheibe 1 und dem Anlageabschnitt 2 austritt.

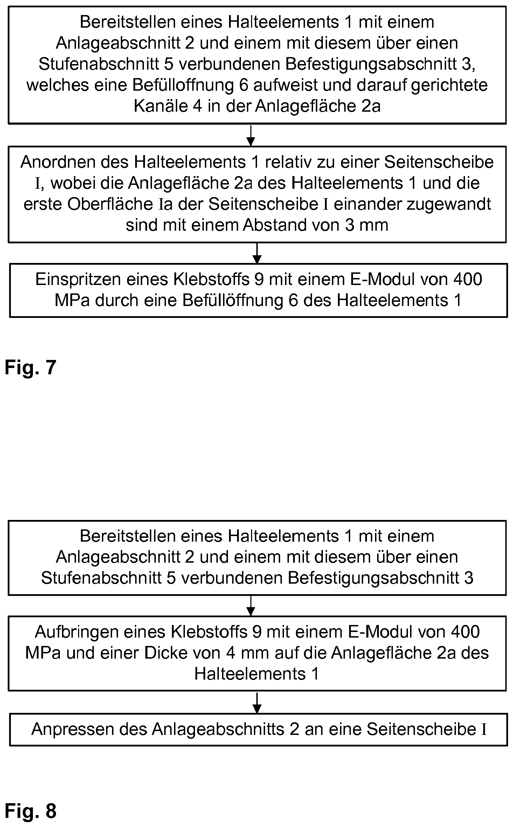

Fig. 7 zeigt ein Flussdiagramm eines Ausführungsbeispiels des erfindungsgemäßen Verfahrens zur Herstellung einer erfindungsgemäßen Seitenscheibe mit Halteelement. Da die gleichmäßige Verteilung des Klebstoffs 9 durch die Kanäle 4 sichergestellt wird, kann beim Einspritzen des Klebstoffs 9 auf die Abdichtung des Zwischenraums zwischen Halteelement 1 und Seitenscheibe I verzichtet werden.

Fig. 8 zeigt ein Flussdiagramm eines weiteren Ausführungsbeispiels des erfindungsgemäßen Verfahrens zur Herstellung einer erfindungsgemäßen Seitenscheibe mit Halteelement. Durch die zentrale Anordnung der Portion des Klebstoff 9 wird sichergestellt, dass kein Klebstoff 9 aus dem Zwischenraum zwischen Halteelement 1 und Seitenscheibe 1 austritt. Daher kann auf Maßnahmen zur Abdichtung des Zwischenraums verzichtet werden.

### Bezugszeichenliste:

- (1): Halteelement für eine Seitenscheibe eines Fahrzeugs
- (2): Anlageabschnitt des Halteelements 1
- (2a): Anlagefläche des Anlageabschnitts 2
- (3): Befestigungsabschnitt des Halteelements 1
- (4): Kanal
- (5): Stufenabschnitt des Halteelements 1
- (6): Befüllöffnung
- (8): Durchführung durch den Befestigungsabschnitt 3
- (9): Klebstoff

- 1: Seitenscheibe eines Fahrzeugs
- Ia: erste Oberfläche der Seitenscheibe I
- Ib: zweite Oberfläche der Seitenscheibe I

- (O): Oberkante der Seitenscheibe I
- (U): Unterkante der Seitenscheibe I
- (V): Vorderkante der Seitenscheibe I
- (H): Hinterkante der Seitenscheibe I

- (L): Länge / Höhe
- (B): Breite
- (D): Dicke / Materialstärke

- A-A': Schnittlinie

## Patentansprüche

1. Seitenscheibe (I) für ein Fahrzeug, mit einer ersten Oberfläche (la), einer dieser gegenüberliegenden zweiten Oberfläche (Ib) und einer Unterkante (U), und mit mindestens einem im Bereich der Unterkante (U) angebrachten Halteelement (1),
wobei das Halteelement (1) einen Anlageabschnitt (2) mit einer Anlagefläche (2a) aufweist zur Befestigung an der Seitenscheibe (I) und einen mit dem Anlageabschnitt (2) verbundenen Befestigungsabschnitt (3) zur Befestigung am Fahrzeug und
wobei das Halteelement (1) einseitig an der Seitenscheibe (I) befestigt ist, indem die Anlagefläche (2a) über einen Klebstoff (9) mit der ersten Oberfläche (Ia) verbunden ist,
**dadurch gekennzeichnet, dass**
der Klebstoff (9) eine Dicke von mindestens 1 mm aufweist und ein E-Modul von mindestens 150 MPa,
wobei das Halteelement (1) eine Befüllöffnung (6) aufweist zum Einspritzen des Klebstoffs (9) in den Zwischenraum zwischen dem Anlageabschnitt (2) und der ersten Oberfläche (Ia) der Seitenscheibe (I),
wobei die Anlagefläche (2a) mindestens einen Kanal (4) aufweist, der auf die Befüllöffnung (6) gerichtet ist und geeignet ist, die Fließrichtung des Klebstoffs (9) zu beeinflussen,
wobei die Anlagefläche (2a) eine Mehrzahl von Kanälen (4) aufweist, welche auf die Befüllöffnung (6) gerichtet sind und fächerartig über die Anlagefläche (2a) verteilt sind.

2. Seitenscheibe (I) nach Anspruch 1, wobei die Dicke des Klebstoffs (9) mindestens 2 mm beträgt, bevorzugt von 2 mm bis 4 mm.

3. Seitenscheibe (I) nach Anspruch 1 oder 2, wobei der Klebstoff (9) ein E-Modul von 150 MPa bis 600 MPa aufweist, bevorzugt von 400 MPa bis 600 MPa.

4. Seitenscheibe (I) nach einem der Ansprüche 1 bis 3, wobei der Anlageabschnitt (2) über einen Stufenabschnitt (5) mit dem Befestigungsabschnitt (3) verbunden ist.

5. Verfahren zur Herstellung einer Seitenscheibe mit Halteelement für ein Fahrzeug nach einem der Ansprüche 1 bis 4, wobei:
(a) ein Halteelement (1), das einen Anlageabschnitt (2) mit einer Anlagefläche (2a) und einen mit dem Anlageabschnitt (2) verbundenen Befestigungsabschnitt (3) aufweist, und eine Seitenscheibe (I) mit einer ersten Oberfläche (la), einer dieser gegenüberliegenden zweiten Oberfläche (Ib) und einer Unterkante (U) bereitgestellt werden und
(b) das Halteelement (1) im Bereich der Unterkante (U) einseitig an der Seitenscheibe (I) befestigt wird, indem die Anlagefläche (2a) über einen Klebstoff (9) mit der ersten Oberfläche (Ia) verbunden wird, wobei der Klebstoff (9) eine Dicke von mindestens 1 mm aufweist und ein E-Modul von mindestens 150 MPa,
wobei das Halteelement (1) eine Befüllöffnung (6) aufweist und eine Anlagefläche (2a), die mindestens einen Kanal (4) aufweist, der auf die Befüllöffnung (6) gerichtet ist und geeignet ist, die Fließrichtung des Klebstoffs (9) zu beeinflussen,
wobei
- das Halteelement (1) in der gewünschten Position zur Seitenscheibe (I) angeordnet wird, wobei die Anlagefläche (2a) auf die erste Oberfläche (Ia) gerichtet ist, und
- der Klebstoff (9) anschließend durch die Befüllöffnung (6) in den Zwischenraum zwischen der Anlagefläche (2a) und der ersten Oberfläche (Ia) eingespritzt wird.

6. Verfahren nach Anspruch 5, wobei mindestens 95% der Anlagefläche (2a) mit Klebstoff (9) benetzt wird, bevor der Klebstoff (9) über die Anlagefläche (2a) übertritt.

7. Verfahren nach einem der Ansprüche 5 bis 6, welches ohne Abdichtung des Zwischenraums zwischen der Anlagefläche (2a) und der ersten Oberfläche (Ia) durchgeführt wird.

8. Verfahren nach einem der Ansprüche 5 bis 7, wobei der Klebstoff (9) eine Aushärtezeit von kleiner als 10 min, bevorzugt von 1 min bis 5 min, aufweist, und wobei keine Maßnahmen der vorübergehenden Positionsstabilisierung während des Aushärtens des Klebstoffs (9) ergriffen werden.

9. Verwendung einer Seitenscheibe (I) nach einem der Ansprüche 1 bis 4 als zu öffnende Seitenscheibe eines Kraftfahrzeugs, bevorzugt eines Personenkraftwagens.

## Claims

1. Side window (I) for a vehicle, having a first surface (Ia), a second surface (Ib) opposite thereto, and a lower edge (U), and having at least one retaining element (1) attached in the region of the lower edge (U),
wherein the retaining element (1) has a contact section (2) with a contact surface (2a) for securing to the side window (I) and a securing section (3) connected to the contact section (2) for securing to the vehicle, and
wherein the retaining element (1) is secured to the side window (I) on one side, by connecting the contact surface (2a) to the first surface (Ia) via an adhesive (9), **characterized in that** the adhesive (9) has a thickness of at least 1 mm and a modulus of elasticity of at least 150 MPa,
wherein the retaining element (1) has a filling opening (6) for injecting the adhesive (9) into the intermediate space between the contact section (2) and the first surface (Ia) of the side window (I),
wherein the contact surface (2a) has at least one channel (4), which is directed toward the filling opening (6) and is suitable for influencing the flow direction of the adhesive (9), wherein the contact surface (2a) has a plurality of channels (4), which are directed toward the filling opening (6) and are distributed over the contact surface (2a) in a fan-like manner.

2. Side window (I) according to claim 1, wherein the thickness of the adhesive (9) is at least 2 mm, preferably from 2 mm to 4 mm.

3. Side window (I) according to claim 1 or 2, wherein the adhesive (9) has a modulus of elasticity of 150 MPa to 600 MPa, preferably of 400 MPa to 600 MPa.

4. Side window (I) according to one of claims 1 through 3, wherein the contact section (2) is connected to the securing section (3) via a step section (5).

5. Method for producing a side window having a retaining element for a vehicle according to one of claims 1 through 4, wherein:
(a) a retaining element (1) that has a contact section (2) with a contact surface (2a) and a securing section (3) connected to the contact section (2), and a side window (I) having a first surface (Ia), a second surface (Ib) opposite thereto, and a lower edge (U) are provided, and
(b) the retaining element (1) is secured to the side window (I) on one side in the region of the lower edge (U), by connecting the contact surface (2a) to the first surface (Ia) via an adhesive (9), wherein the adhesive (9) has a thickness of at least 1 mm and a modulus of elasticity of at least 150 MPa,
wherein the retaining element (1) has a filling opening (6) and a contact surface (2a) that has at least one channel (4) that is directed toward the filling opening (6) and is suitable for influencing the flow direction of the adhesive (9),
wherein
- the retaining element (1) is arranged in the desired position relative to the side window (I), wherein the contact surface (2a) is directed toward the first surface (Ia), and
- the adhesive (9) is then injected through the filling opening (6) into the intermediate space between the contact surface (2a) and the first surface (Ia).

6. Method according to claim 5, wherein at least 95% of the contact surface (2a) is wetted with adhesive (9) before the adhesive (9) flows beyond the contact surface (2a).

7. Method according to one of claims 5 through 6, which is carried out without sealing the intermediate space between the contact surface (2a) and the first surface (Ia).

8. Method according to one of claims 5 through 7, wherein the adhesive (9) has a curing time of less than 10 min, preferably of 1 min to 5 min, and wherein no measures for temporary positional stabilization during the curing of the adhesive (9) are taken.

9. Use of a side window (I) according to one of claims 1 through 4 as an openable side window of a motor vehicle, preferably of a passenger car.

## Revendications

1. Fenêtre latérale (I) pour un véhicule, ayant une première surface (la), une deuxième surface (Ib) opposée à celle-ci, et un bord inférieur (U), et ayant au moins un élément de retenue (1) fixé dans la région du bord inférieur (U),
dans lequel l'élément de retenue (1) a une section de contact (2) avec une surface de contact (2a) pour se fixer à la fenêtre latérale (I) et une section de fixation (3) reliée à la section de contact (2) pour se fixer au véhicule, et
dans lequel l'élément de retenue (1) est fixé à la fenêtre latérale (I) d'un côté, en reliant la surface de contact (2a) à la première surface (Ia) par l'intermédiaire d'un adhésif (9), **caractérisé en ce que** l'adhésif (9) a une épaisseur d'au moins 1 mm et un module d'élasticité d'au moins 150 MPa,
dans lequel l'élément de retenue (1) possède une ouverture de remplissage (6) pour injecter l'adhésif (9) dans l'espace intermédiaire entre la section de contact (2) et la première surface (Ia) de la fenêtre latérale (I),
la surface de contact (2a) comporte au moins un canal (4) orienté vers l'ouverture de remplissage (6) et permettant d'influencer le sens d'écoulement de la colle (9),
la surface de contact (2a) comporte plusieurs canaux (4) orientés vers l'ouverture de remplissage (6) et répartis sur la surface de contact (2a) en forme d'éventail.

2. Fenêtre latérale (I) selon la revendication 1, dans laquelle l'épaisseur de l'adhésif (9) est d'au moins 2 mm, de préférence de 2 mm à 4 mm.

3. Fenêtre latérale (I) selon la revendication 1 ou 2, dans laquelle l'adhésif (9) a un module d'élasticité de 150 MPa à 600 MPa, de préférence de 400 MPa à 600 MPa.

4. Fenêtre latérale (I) selon l'une des revendications 1 à 3, dans laquelle la section de contact (2) est reliée à la section de fixation (3) par une section de marche (5).

5. Procédé de fabrication d'une fenêtre latérale comportant un élément de retenue pour un véhicule selon l'une des revendications 1 à 4, dans lequel :
(a) un élément de retenue (1) comportant une section de contact (2) avec une surface de contact (2a) et une section de fixation (3) reliée à la section de contact (2), et une fenêtre latérale (I) comportant une première surface (la), une deuxième surface (Ib) opposée à celle-ci, et un bord inférieur (U) sont fournis, et
(b) l'élément de retenue (1) est fixé à la fenêtre latérale (I) d'un côté dans la région du bord inférieur (U), en reliant la surface de contact (2a) à la première surface (Ia) par l'intermédiaire d'un adhésif (9), dans lequel l'adhésif (9) a une épaisseur d'au moins 1 mm et un module d'élasticité d'au moins 150 MPa,
dans lequel l'élément de retenue (1) a une ouverture de remplissage (6) et une surface de contact (2a) qui a au moins un canal (4) qui est dirigé vers l'ouverture de remplissage (6) et qui est apte à influencer la direction d'écoulement de la colle (9),
dans lequel
- l'élément de retenue (1) est placé dans la position souhaitée par rapport à la fenêtre latérale (I), la surface de contact (2a) étant orientée vers la première surface (la), et
- l'adhésif (9) est ensuite injecté par l'ouverture de remplissage (6) dans l'espace intermédiaire entre la surface de contact (2a) et la première surface (Ia).

6. Procédé selon la revendication 5, dans lequel au moins 95% de la surface de contact (2a) est mouillée par l'adhésif (9) avant que l'adhésif (9) ne s'écoule au-delà de la surface de contact (2a).

7. Procédé selon l'une des revendications 5 à 6, mis en oeuvre sans sceller l'espace intermédiaire entre la surface de contact (2a) et la première surface (Ia).

8. Procédé selon l'une des revendications 5 à 7, dans lequel l'adhésif (9) a un temps de durcissement inférieur à 10 min, de préférence de 1 min à 5 min, et dans lequel aucune mesure de stabilisation temporaire de la position pendant le durcissement de l'adhésif (9) n'est prise.

9. Utilisation d'une fenêtre latérale (I) selon l'une des revendications 1 à 4 comme fenêtre latérale ouvrable d'un véhicule automobile, de préférence d'une voiture de tourisme.
